(19) Europäisches Patentamt
European Patent Office
Office européen des brevets

(11) **EP 2 447 345 A1**

(12) **EUROPEAN PATENT APPLICATION**
published in accordance with Art. 153(4) EPC

(43) Date of publication:
**02.05.2012 Bulletin 2012/18**

(21) Application number: **10789247.3**

(22) Date of filing: **17.06.2010**

(51) Int Cl.:
***C10M 111/00*** $^{(2006.01)}$
***F16F 13/08*** $^{(2006.01)}$
***F16H 41/32*** $^{(2006.01)}$
***C10M 105/14*** $^{(2006.01)}$
***C10M 107/38*** $^{(2006.01)}$
***C10M 107/50*** $^{(2006.01)}$
***C10N 30/00*** $^{(2006.01)}$
***C10N 30/18*** $^{(2006.01)}$
***C10N 40/08*** $^{(2006.01)}$

(86) International application number:
**PCT/JP2010/004057**

(87) International publication number:
**WO 2010/146868 (23.12.2010 Gazette 2010/51)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **17.06.2009 JP 2009144620**

(71) Applicant: **Bridgestone Corporation**
**Tokyo 104-8340 (JP)**

(72) Inventors:
- **UEKI, Akira**
  **Yokohama-shi**
  **Kanagawa 244-8510 (JP)**
- **YANAGIDA, Motohiro**
  **Yokohama-shi**
  **Kanagawa 244-8510 (JP)**
- **ISHIYAMA, Tatsurou**
  **Yokohama-shi**
  **Kanagawa 244-8510 (JP)**
- **TASHIRO, Katsumi**
  **Kodaira-shi**
  **Tokyo 187-8531 (JP)**
- **SUZUKI, Yasuhiro**
  **Yokohama-shi**
  **Kanagawa 244-8510 (JP)**
- **NAGASHIMA, Yasuyuki**
  **Yokohama-shi**
  **Kanagawa 244-8510 (JP)**

(74) Representative: **Oxley, Robin John George**
**Marks & Clerk LLP**
**90 Long Acre**
**London**
**WC2E 9RA (GB)**

(54) **WORKING LIQUID AND DEVICE UTILIZING SAME**

(57) Provided is a working fluid which is sealed in a liquid-sealed space in a device to be used, including: a first liquid and a second liquid which are insoluble with each other, wherein a weight of the second liquid contained is smaller than that of the first liquid, and the second liquid has a higher vapor pressure than that of a main component of the first liquid at the same temperature.

FIG. 1

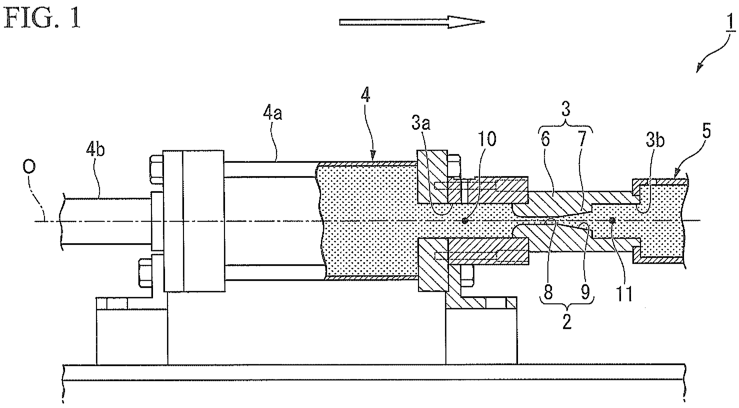


EP 2 447 345 A1

## Description

[Field of the Invention]

The present invention relates to a working fluid sealed in a liquid-sealed space in a device to be used, Priority is claimed on Japanese Patent Application No. 2009-144620, filed on June 17, 2009, the content of which is incorporated herein by reference.

[Description of Related Art]

Traditionally, it has been known that in general devices in which a working fluid is sealed in a liquid-sealed space to be used, such as an vibration control device or an ink pressurizing mechanism of an ink jet printer shown in Patent Document 1 and Patent Document 2 as described below, when the liquid pressure of the liquid-sealed space is abruptly reduced, cavitation that bubbles are generated in the working fluid occurs.

[Citation List]

[Patent Document]

[Patent Document 1] Japanese Unexamined Patent Application, First Publication No. 60-34541.
[Patent Document 2] Japanese Unexamined Patent Application, First Publication No. 5-64897.

SUMMARY OF THE INVENTION

[Problem to be Solved by the Invention]

If cavitation occurs, when the liquid pressure of the liquid-sealed space is subsequently returned to its original level, bubbles disappear from the liquid (cavitation collapse), resulting in the generation of shock waves. Therefore, there is a concern that, for example, abnormal noise or erosion may occur.

The present invention was made in light of the foregoing circumstances, its object of the invention is to provide a working fluid capable of suppressing the magnitude of shock waves generated during cavitation collapse.

[Means for Solving the Problem]

In order to solve the problems, the invention proposes the following means.
A working fluid according to the invention is a working fluid which is sealed in a liquid-sealed space in a device to be used, and includes a first liquid and a second liquid which are insoluble with each other. In addition, the weight of the second liquid contained is smaller than that of the first liquid, and the second liquid has a higher vapor pressure than that of a main component of the first liquid at the same temperature.

In addition, the surface tension of the second liquid is smaller than a surface tension of the first liquid.

According to the invention, the working fluid sealed in the liquid-sealed space includes the first liquid and the second liquid that are insoluble with each other, and the weight of the second liquid contained is smaller than that of the first liquid. Therefore, according to the invention, when the working fluid flows in the liquid-sealed space, the second liquid that becomes countless granules is dispersed in the first liquid while being independent from each other.
In addition, for example, when the liquid-sealed space is expanded or the working fluid flows in the liquid-sealed space at high speed and thus the liquid pressure of the liquid-sealed space is reduced, cavitation primarily occurs in the second liquid which has a higher vapor pressure than that of the main component of the first liquid. Accordingly, a significant reduction in the liquid pressure of the liquid-sealed space is suppressed, thereby cavitation is suppressed from occurring in the first liquid. In addition, even though cavitation occurs in the first liquid, the growth of bubbles is suppressed. Therefore, shock waves generated from the cavitation collapse in the first liquid can be suppressed to be small.
On the other hand, since the second liquid is dispersed in the first liquid as described above, bubbles are suppressed from significantly growing in the second liquid. Therefore, an increase in the contraction speed of bubbles during condensation is suppressed, and thus shock waves generated from the cavitation collapse in the second liquid can be suppressed to be small.
From the above, the magnitude of the shock waves generated from the entirety of the working fluid in the liquid-sealed space during the cavitation collapse can be suppressed.

Moreover, countless shock waves generated from the individual second liquid dispersed in the first liquid interfere with each other to cancel out the energy thereof. Therefore, as described above, shock waves generated in the second liquid can be suppressed to be small, and the magnitude of the shock waves generated from the entirety of the working fluid in the liquid-sealed space during the cavitation collapse can be further suppressed.
In addition, thereafter, when the flow of the working fluid in the liquid-sealed space is continued, the second liquid is dispersed in the first liquid more finely and evenly over the entire area. Therefore, the effects of the actions described above can be effectively achieved.

In addition, the weight of the second liquid contained in the working fluid, of which the vapor pressure is higher than that of the main component of the first liquid and thus in which cavitation is more likely to occur, is smaller than that of the first liquid. Therefore, degradation of the physical properties of the first liquid by the second liquid is suppressed, and thus the physical properties of the first liquid can be exhibited as the performance of the working fluid.

On the other hand, according to the invention, since the surface tension of the second liquid is smaller than that of the first liquid, the second liquid can be dispersed in the first liquid reliably in the fine granules so as to be independent from each other. Therefore, the effects of the actions described above are more effectively achieved.

In addition, the first liquid may include at least one of ethylene glycol and propylene glycol. In addition, the second liquid may include at least one of a silicone oil, a mineral oil, a fluorine oil, and a higher alcohol.
Moreover, 50.1 or more weight% and 99.9 or less weight% of the first liquid may be contained, and 0.1 or more weight% and 49.9 or less weight% of the second liquid may be contained.

In such a case, degradation of the physical properties of the first liquid by the second liquid is reliably suppressed, and thus the physical properties of the first liquid can be more reliably exhibited as the performance of the working fluid.

[Effects of the Invention]

According to the working fluid related to the invention, the magnitude of shock waves generated during cavitation collapse can be suppressed.

BRIEF DESCRIPTION OF THE DRAWINGS

FIG. 1 is a cross-sectional view of main parts of a test device used in a verification test of the invention.
FIG. 2 is an enlarged cross-sectional view of the test device shown in FIG. 1.
FIG. 3 is a graph showing the relationship between a cavitation number and a vibration acceleration.
FIG. 4 is a graph showing the relationship between the cavitation number and the vibration acceleration.
FIG. 5 is a graph showing the relationship between the cavitation number and the vibration acceleration.
FIG. 6 is a graph showing the relationship between the cavitation number and the vibration acceleration.
FIG. 7 is a graph showing the relationship between the cavitation number and the vibration acceleration.

PREFERRED EMBODIMENTS

Hereinafter, a working fluid according to an embodiment of the invention will be described.
The working fluid according to this embodiment is sealed in a liquid-sealed space in a device to be used. In addition, the working fluid according to this embodiment, for example, achieves actions of transferring energy such as kinetic energy or heat energy in a device or absorbing or attenuating a load exerted from the outside of the device. In addition, in the device having the working fluid sealed in the liquid-sealed space, on the basis of the actions of the working fluid described above, the required performance for the device is exhibited.
The working fluid is appropriately employed as a working oil that is sealed in an ink pressurizing mechanism of an ink jet printer and various hydraulic devices, and flows in the device to transmit kinetic energy, a heat medium (for example, a refrigerant) that is sealed in a cooling device for cooling a liquid crystal panel unit in a liquid crystal projector or other cooling devices or a heating device, and flows in the device to transmit heat energy, a sealing liquid that is sealed in an vibration control device (for example, an engine mount or a suspension of a vehicle) and flows in the device to absorb and attenuate input vibration, and the like.
In addition, the working fluid is, in each of the devices exemplified above, sealed in the liquid-sealed space configured as, for example, a liquid chamber formed as a cylinder, an airtight container, or the like, and a flow path formed as a pipe, a tube, or the like.

The working fluid contains a first liquid and a second liquid which are insoluble with each other.
In addition, in this embodiment, the second liquid has a smaller weight than that of the first liquid, and has a higher vapor pressure than that of a main component of the first liquid at the same temperature. In addition, the surface tension of the second liquid is smaller than that of the first liquid. Moreover, the second liquid has a lower polarity than that of the first liquid. Moreover, the second liquid has a greater molecular weight than that of the first liquid.
In addition, at least at one point of a temperature range of equal to or higher than -30°C and equal to or lower than 100°C, the second liquid has a higher vapor pressure than that of the main component of the first liquid and has a smaller surface tension than that of the first liquid. In addition, for example, the second liquid has a vapor pressure two or more times the vapor pressure of the main component of the first liquid.

It is preferable that the above first liquid includes at least one of ethylene glycol and propylene glycol, for example. In addition, the second liquid may includes at least one of, for example, a silicone oil, a mineral oil, a fluorine oil, and a higher alcohol. In addition, the second liquid may include at least one of a silicone oil, a mineral coil, a fluorine oil, a higher alcohol, an aromatic compound, and phenols. In addition, in this specification, the higher alcohol indicates an alcohol which is a liquid at a normal temperature (for example, 5°C to 35°C) and at atmospheric pressure, and an alcohol having 6 or more carbon atoms.
In this embodiment, the working fluid contains 50.1 or more weight% and 99.9 or less weight% of the first liquid, and 0.1 or more weight% and 49.9 or less weight% of the second liquid. Preferably, the working fluid contains 80 or more weight% and 99.9 or less weight% of the first liquid, and 0.1 or more weight% and 20 or less weight% of the second liquid.

As described above, according to the working fluid related to this embodiment, the working fluid sealed in the liquid-sealed space includes the first liquid and the second liquid which are insoluble with each other, and the weight of the second liquid contained is smaller than that of the first liquid. Therefore, when the working fluid flows in the liquid-sealed space, the second liquid that becomes countless granules is dispersed in the first liquid while being independent from each other.

In addition, when the liquid pressure of the liquid-sealed space is reduced since, for example, the liquid-sealed space is expanded or the working fluid flows in the liquid-sealed space at high speed, cavitation primarily occurs in the second liquid which has a higher vapor pressure than that of the main component of the first liquid. Accordingly, a significant reduction in the liquid pressure of the liquid-sealed space is suppressed, so that cavitation is suppressed from occurring in the first liquid. In addition, even though cavitation occurs in the first liquid, the growth of bubbles is suppressed. Therefore, in this embodiment, shock waves generated from the cavitation collapse in the first liquid can be suppressed to be small.

On the other hand, since the second liquid is dispersed in the first liquid as described above, bubbles are suppressed from significantly growing in the second liquid. Therefore, in this embodiment, an increase in the contraction speed of bubbles during condensation is suppressed, and thus shock waves generated from the cavitation collapse in the second liquid can be suppressed to be small.

From the above, in this embodiment, the magnitude of the shock waves generated from the entirety of the working fluid in the liquid-sealed space during the cavitation collapse can be suppressed.

Moreover, in this embodiment, countless shock waves generated from the individual second liquid dispersed in the first liquid interfere with each other to cancel out the energy thereof. Therefore, in this embodiment, as described above, shock waves generated in the second liquid can be suppressed to be small, and the magnitude of the shock waves generated from the entirety of the working fluid in the liquid-sealed space during the cavitation collapse can be further suppressed.

In addition, thereafter, when the flow of the working fluid in the liquid-sealed space is continued, the second liquid is dispersed in the first liquid more finely and evenly over the entire area, so that the effects of the actions described above can be effectively achieved.

In addition, in this embodiment, the weight of the second liquid contained in the working fluid, of which the vapor pressure is higher than that of the main component of the first liquid and thus in which cavitation is more likely to occur, is smaller than that of the first liquid. Therefore, degradation of the physical properties of the first liquid by the second liquid is suppressed, and thus the physical properties of the first liquid can be exhibited as the performance of the working fluid.

In addition, since the surface tension of the second liquid is smaller than that of the first liquid, the second liquid can be dispersed in the first liquid reliably in the fine granules so as to be independent from each other. Therefore, the effects of the actions described above are more effectively achieved.

In addition, in this embodiment, the first liquid contains at least one of ethylene glycol and propylene glycol, and the second liquid contains at least one of a silicone oil, a mineral oil, a fluorine oil, and a higher alcohol. Moreover, in this embodiment, 50.1 or more weight% and 99.9 or less weight% of the first liquid is contained, and 0.1 or more weight% and 49.9 or less weight% of the second liquid is contained. Therefore, in this embodiment, degradation of the physical properties of the first liquid by the second liquid is reliably suppressed, and thus the physical properties of the first liquid can be more reliably exhibited as the performance of the working fluid.

In addition, the technical scope of the invention is not limited to the embodiment described above, and various modifications can be added without departing from the spirit of the invention.

For example, the working fluid is not limited to the two kinds of liquid, and may contain three or more kinds of liquid.

In addition, in the embodiment described above, the surface tension of the second liquid is smaller than that of the first liquid; however, the embodiment is not limited thereto.

In addition, in the invention, the first liquid may include a plurality of components (liquids) having compatibility. In this case, when the vapor pressure of the second liquid is higher than the vapor pressure of the main component of the first liquid at the same temperature, the vapor pressure of the first liquid may be higher than the vapor pressure of the second liquid. For example, when the first liquid is made of a mixed solution of ethylene glycol (with a vapor pressure of 13.4 Pa at room temperature and a content ratio of 96% as a main component) having compatibility and water (with a vapor pressure of 3173 Pa at room temperature and a content ratio of 4% as a sub component), the vapor pressure of the first liquid (the mixed solution) becomes 400 Pa. However, when the vapor pressure of the second liquid is higher than the vapor pressure (13.4 Pa) of the main component of the first liquid, the effect of suppressing the generation of cavitation is obtained even though the vapor pressure of the second liquid is lower than the vapor pressure (400 Pa) of the first liquid.

In addition, when the vapor pressure of the second liquid is higher than the vapor pressure of water as a single material, water as a single material may be used as the first liquid. That is, the first liquid may contain water as a single material, ethylene glycol as a single material, a propylene glycol as a single material, or at least two of these materials. In addition, the second liquid may contain a silicone oil as a single material, a mineral coil as a single material, a fluorine oil as a single material, a higher alcohol as a single material, or at least two of these materials.

In addition, in a range not departing from the spirit of the invention, the components in the embodiment described above may be appropriately replaced with well-known components, and modified examples described above may be appropriately combined.

Here, in order to verify the verification test related to the effects of the actions described above, first to fourth verification tests having different kinds of working fluid were performed.

First, a test device used for the verification tests will be described with reference to the drawings.

As shown in FIG. 1, the test device 1 includes a measurement tubular portion 3 in which a restriction passage 2 extending in the axial line O direction is formed, supplying means 4 for supplying the working fluid to the inside of the measurement tubular portion 3 so that the working fluid flows from one end opening portion 3 a of the measurement tubular portion 3 toward the other end opening portion 3b, a discharge unit 5 to which the working fluid is discharged from the other end opening portion 3b of the measurement tubular portion 3 according to the amount of the working fluid supplied to the inside of the measurement tubular portion 3 by the supplying means 4.

In addition, hereinafter, in the measurement tubular portion 3, the one end opening portion 3a side along the axial line O direction is referred to as an upstream side, and the other end opening portion 3b side is referred to as a downstream side. In addition, during the verification test, the working fluid flows from the upstream side to the downstream side (the arrow direction of FIG. 1).

The supplying means 4 includes a cylinder 4a which is disposed on the upstream side from and in the same axis as the measurement tubular portion 3, communicates with the inside of the measurement tubular portion 3, and is filled with the working fluid, and a piston 4b which is displaced in the cylinder 4a from the upstream side toward the downstream side to supply the working fluid filling the inside of the cylinder 4a to the inside of the measurement tubular portion 3.

As shown in FIG. 2, the measurement tubular portion 3 includes an outer tubular portion 6 of which the inside diameter is constant regardless of the position in the axial line O direction, and an inner tubular portion 7 which is disposed in the outer tubular portion 6 in the same axis and of which the outer peripheral surface is connected to the inner peripheral surface of the outer tubular portion 6 over the entire periphery. In addition, in the inner tubular portion 7, the restriction passage 2 which extends along the axial line O direction to penetrate through the inner tubular portion 7 and is circular in a transverse cross-section is formed in the same axis as the axial line O.

The restriction passage 2 is configured of a first passage 8 of which the diameter is constant regardless of the position in the axial line O direction, and a second passage 9 which is connected to the downstream side of the first passage 8 and of which the diameter is gradually increased toward the downstream side from the upstream side.

In addition, inside the measurement tubular portion 3, at a part connected to the restriction passage 2 from the upstream side and a part connected from the downstream side, an upstream side liquid pressure sensor 10 and a downstream side liquid pressure sensor 11 that measure liquid pressures are respectively provided on the axial line O.

In addition, in the cylinder 4a, a displacement sensor (not shown) that measures a displacement amount along the axial line O direction of the piston 4b is provided.

In addition, in a fluid storage unit (not shown) disposed further downstream than the discharge unit 5, a temperature measurement sensor that measures the temperature of the working fluid filling the inside of the test device 1 is provided.

In addition, on the outer peripheral surface of the measurement tubular portion 3, 4 accelerometers (not shown) that measure vibration accelerations related with the magnitude of the shock wave generated during cavitation collapse are provided at intervals in the axial line O direction. Two of the four accelerometers are provided at positions corresponding to the second passage 9 on the outer peripheral surface of the measurement tubular portion 3, and the remaining two accelerometers are provided at positions corresponding to parts connected to the second passage 9 from the downstream side inside the measurement tubular portion 3 on the outer peripheral surface of the measurement tubular portion 3.

In addition, in the test device 1, the inside diameter L1 of the outer tubular portion 6 is set to 43 mm, the diameter L2 of the first passage 8 is set to 5.5 mm, the diameter L3 of the downstream side end portion of the second passage 9 is set to 20 mm, the length L4 of the first passage 8 along the axial line O direction is set to 60 mm, the length L5 of the second passage 9 along the axial line O direction is set to 40 mm, the length L6 between the upstream side end portion of the restriction passage 2 and the upstream side liquid pressure sensor 10 along the axial line O direction is set to 60 mm, and the length L7 between the downstream side end portion of the restriction passage 2 and the downstream side liquid pressure sensor 11 along the axial line O direction is set to 25 mm.

Next, working fluids used in the first to fourth verification tests will be described.

In each of the verification tests, as an example according to related art, a working fluid made from the first liquid as a single material was employed, and as Examples 1 to 6, working fluids made from the first liquid and the second liquid were employed.

In each of the verification tests, ethylene glycol was employed as the first liquid.

In addition, as the second liquid, in the first verification test, Novec (registered trademark) HFE-7300 (produced by Sumitomo 3M Limited) (hereinafter, referred to as HFE-7300) which is a fluorine oil was employed, in the second verification test, Novec (registered trademark) HFE-7200 (produced by Sumitomo 3M Limited) (hereinafter, referred to as HFE-7200) which is a fluorine oil was employed, in the third verification test, a silicone oil having a kinetic viscosity of 1 cSt (hereinafter, referred to as a silicone oil 1 cSt) was employed, and in the fourth verification test, a silicone oil having a kinetic viscosity of 2 cSt (hereinafter, referred to as a silicone oil 2 cSt) was employed.

In addition, the vapor pressures of, as the liquids, ethylene glycol, HFE-7300, HFE-7200, the silicone oil 1 cSt, and the silicone oil 2 cSt are respectively 7 Pa, 6000 Pa, 16,000 Pa, 679.9 Pa, and 14.7 Pa at 25°C.

In addition, in each of the first to fourth verification tests, the content ratio of the second liquid is 0.25 weight% in Example 1, the content ratio of the second liquid is 0.50 weight% in Example 2, the content ratio of the second liquid is 1 weight% in Example 3, the content ratio of the second liquid is 2 weight% in Example 4, the content ratio of the second liquid is 4 weight% in Example 5, and the content ratio of the second liquid is 8 weight% in Example 6.

In addition, in each of the first to fourth verification tests, for the example according to the related art and Examples 1 to 6, in a state where the corresponding working fluid fills the inside of the measurement tubular portion 3, the working fluid was flowed from the one end opening portion 3a of the measurement tubular portion 3 to the other end opening portion 3b by the supplying means 4, and the vibration acceleration was measured as a voltage value (V) by the accelerometers.

Meantime, in each of the verification tests, for the example according to the related art and Examples 1 to 6, while the cavitation numbers are mutually matched, vibration accelerations at a plurality of different cavitation numbers were measured.

In addition, the cavitation number σ is calculated from the following expression.

$$\sigma=(Pd-Pv)/(1/2\cdot\rho V^2)$$

where Pd represents a downstream liquid pressure (Pa) further downstream than the restriction passage 2, Pv represents a vapor pressure (Pa) of the working fluid at a liquid temperature t during verification, ρ represents a density (kg/$m^3$) of the working fluid at a liquid temperature t during verification, and V represents a flow velocity (m/s) of the working fluid in the restriction passage 2.

In this verification test, as the downstream liquid pressure Pd, a measurement value measured by the downstream side liquid pressure sensor 11 is used, and as the liquid temperature t for calculating the vapor pressure Pv and the density p, a measurement value measured by the temperature measurement sensor is used. In addition, in any of the example according to the related art and Examples 1 to 6, as the vapor pressure Pv and the density p, the vapor pressure and density of the first liquid at the liquid temperature t are used. That is, the cavitation number in Examples 1 to 6 was set to a cavitation number in a case where the working fluid is made from the first liquid as a single material. In addition, the flow velocity V was calculated on the basis of the displacement amount of the piston 4b measured by the displacement sensor.

Next, the results are shown in FIGS. 3 to 6. FIGS. 3 to 6 are graphs showing the relationships between the cavitation number and the vibration acceleration. In addition, the horizontal axis of the graph represents the cavitation number (a dimensionless quantity), and the vertical axis represents the vibration acceleration (V). The results of the first to fourth verification tests are shown in the order of FIGS. 3 to 6. In addition, the value of the vibration acceleration in each of the graphs is the maximum value from among vibration accelerations measured by the four accelerometers.

From the results of the verification tests, it was confirmed that the vibration acceleration in Examples 1 to 6 has a tendency to be reduced compared to the example according to the related art. Therefore, it was confirmed that the working fluid which contains a smaller weight of the second liquid of which the vapor pressure is higher than that of the main component of the first liquid at the same temperature, than that of the first liquid can suppress the magnitude of the shock waves generated during cavitation collapse.

In addition, from the comparison between FIGS. 3 and 4 and the comparison between FIGS. 5 and 6, it was confirmed that, when the main components of the second liquids are the same, as the difference between the vapor pressures of the first liquid and the second liquid is increased, the above-described effects are more effectively achieved.

Next, using a working fluid which is a different kind from the working fluid used in the first to fourth verification tests, a fifth verification test was performed. In addition, in the fifth verification test, only the differences from the first verification test will be described.

In the fifth verification test, water was employed as the first liquid, and Novec (registered trademark) HFE-7100 (produced by Sumitomo 3M Limited) (hereinafter, referred to as HFE-7100) which is a fluorine oil was employed as the second liquid.

In addition, the vapor pressures of both the liquids, that is, water and HFE-7100 are respectively 3173 Pa and 280,000 Pa at 25°C.

Next, the results are shown in FIG. 7. FIG. 7 is a graph showing the relationship between the cavitation number and the vibration accelerator. The horizontal axis of the graph represents the cavitation number (a dimensionless quantity), and the vertical axis represents the vibration acceleration (V). In addition, the value of the vibration acceleration in the graph is the maximum value from among vibration accelerations measured by the four accelerometers.
From the result, it was confirmed that the vibration accelerations of Examples 1 to 6 have a tendency to be reduced compared to the example according to the related art and thus the magnitude of shock waves generated during cavitation collapse was suppressed.

[Industrial Applicability]

According to the working fluid related to the invention, the magnitude of shock waves generated during cavitation collapse can be suppressed.

## Claims

**1.** A working fluid which is sealed in a liquid-sealed space in a device to be used, comprising:

a first liquid and a second liquid which are insoluble with each other,
wherein a weight of the second liquid contained is smaller than that of the first liquid, and the second liquid has a higher vapor pressure than that of a main component of the first liquid at the same temperature.

**2.** The working fluid according to claim 1, wherein a surface tension of the second liquid is smaller than a surface tension of the first liquid.

**3.** The working fluid according to claim 1,
wherein the first liquid contains at least one of ethylene glycol and propylene glycol, and
the second liquid contains at least one of a silicone oil, a mineral oil, a fluorine oil, and a higher alcohol.

**4.** The working fluid according to claim 2,
wherein the first liquid contains at least one of ethylene glycol and propylene glycol, and
the second liquid contains at least one of a silicone oil, a mineral oil, a fluorine oil, and a higher alcohol.

**5.** A cooling device using the working fluid according to any one of claims 1 to 4,
wherein the working fluid contains 50.1 or more weight% and 99.9 or less weight% of the first liquid, and 0.1 or more weight% and 49.9 or less weight% of the second liquid.

**6.** A pressurizing mechanism using the working fluid according to any one of claims 1 to 4,
wherein the working fluid contains 50.1 or more weight% and 99.9 or less weight% of the first liquid, and 0.1 or more weight% and 49.9 or less weight% of the second liquid.

**7.** A hydraulic mechanism using the working fluid according to any one of claims 1 to 4,
wherein the working fluid contains 50.1 or more weight% and 99.9 or less weight% of the first liquid, and 0.1 or more weight% and 49.9 or less weight% of the second liquid.

**8.** A heating device using the working fluid according to any one of claims 1 to 4,
wherein the working fluid contains 50.1 or more weight% and 99.9 or less weight% of the first liquid, and 0.1 or more weight% and 49.9 or less weight% of the second liquid.

**9.** A working fluid which is sealed in a liquid-sealed space in a device to be used, comprising:

a first liquid and a second liquid which are insoluble with each other,
wherein a surface tension of the second liquid is smaller than a surface tension of the first liquid.

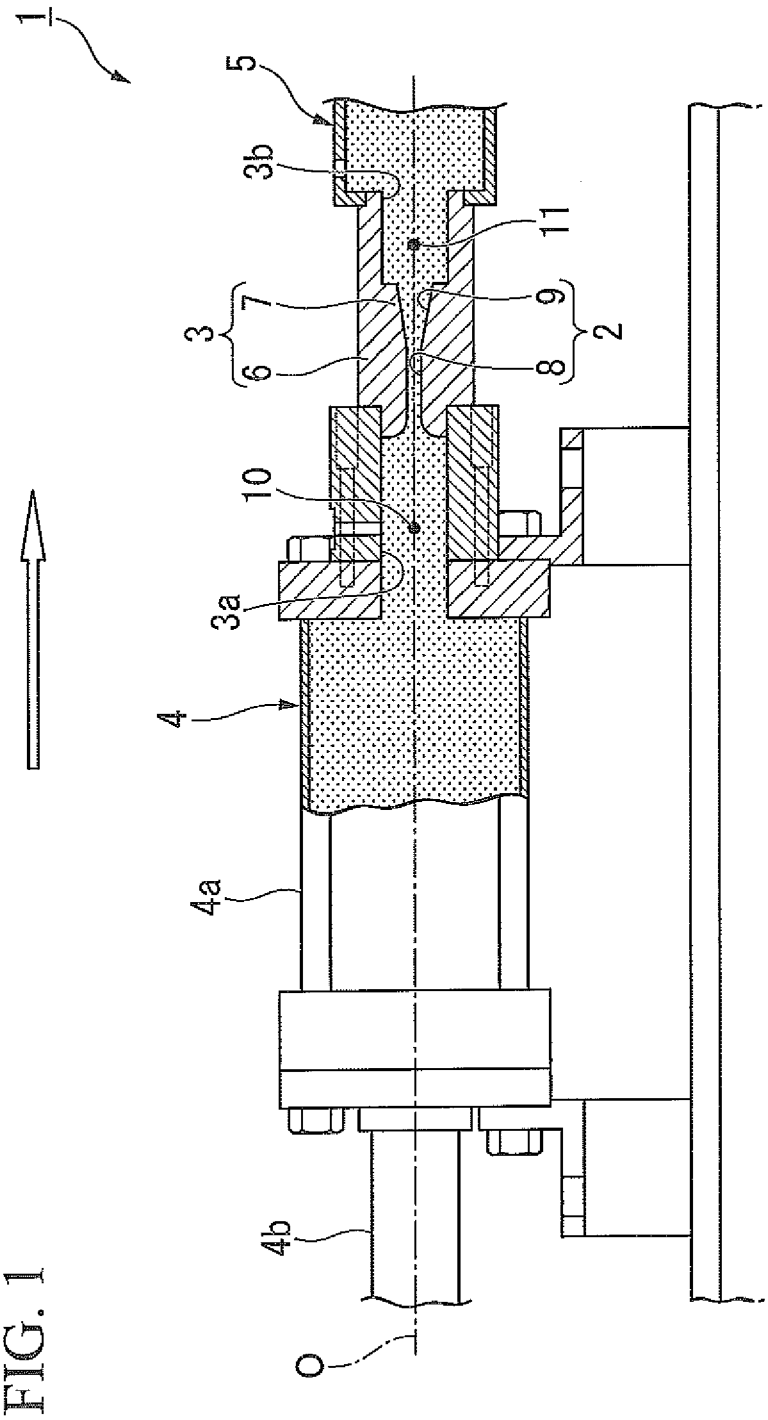


FIG. 1

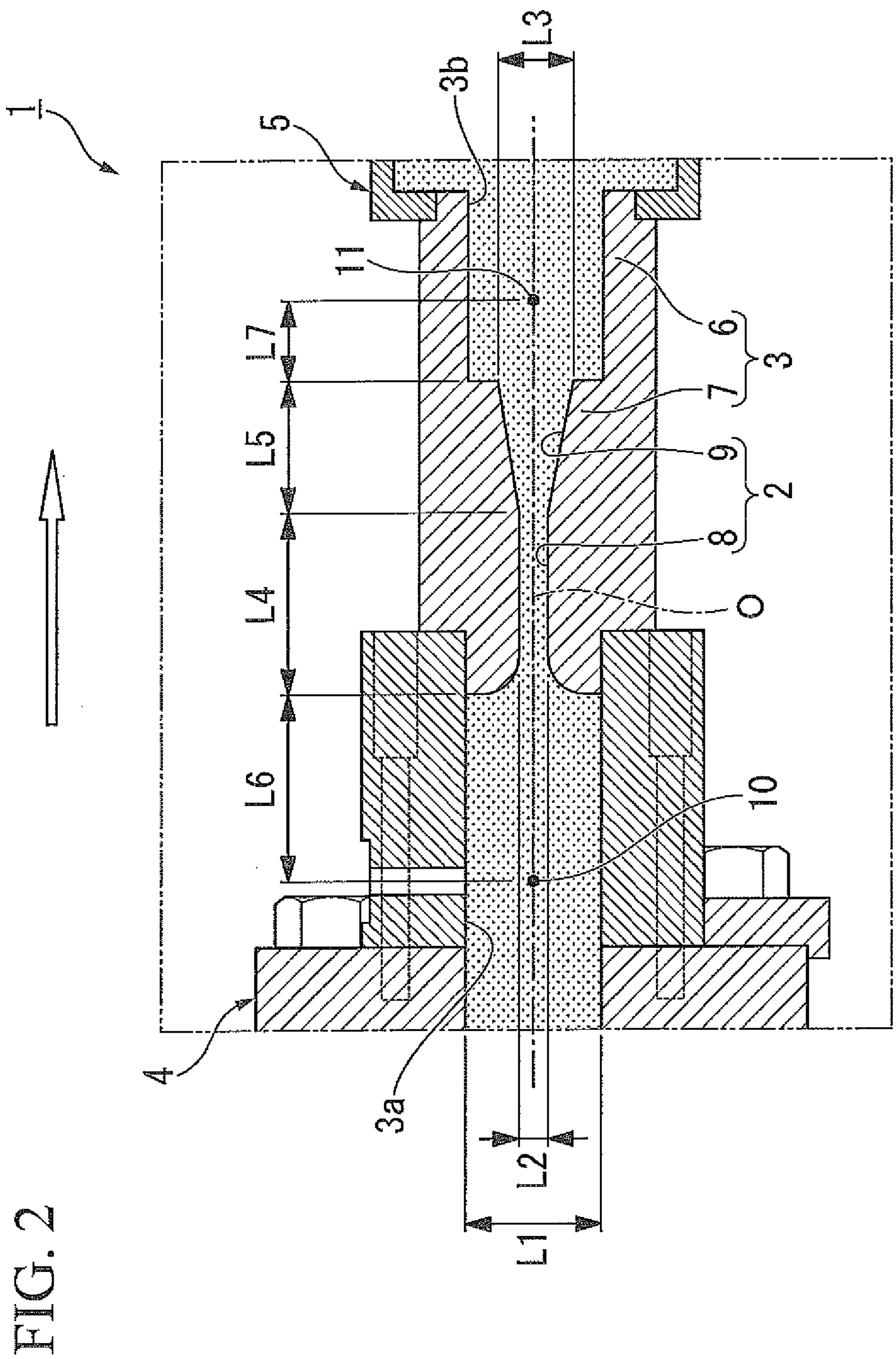


FIG. 2

FIG. 3

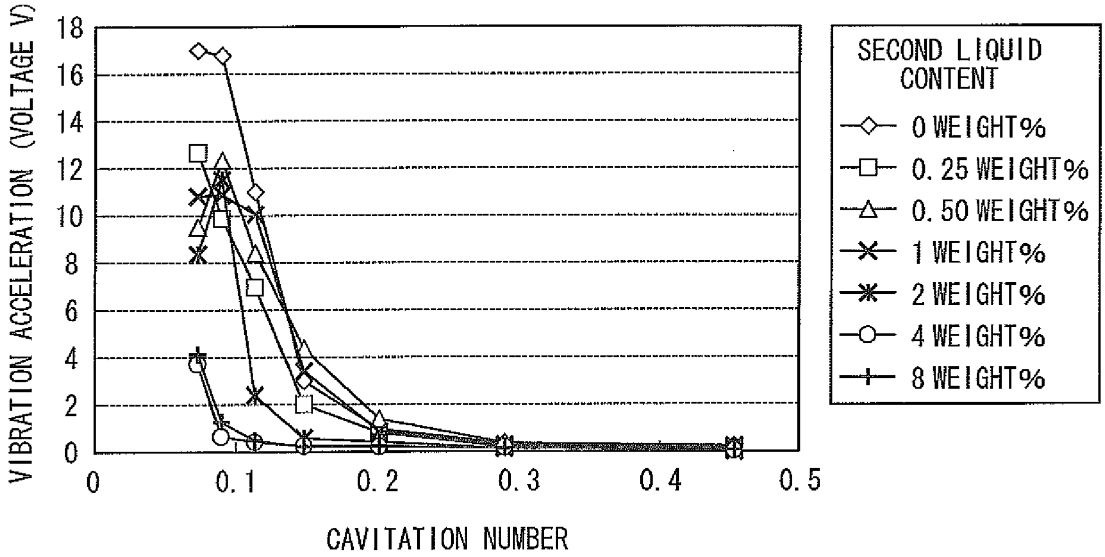
VIBRATION ACCELERATION (VOLTAGE V)
18
16
14
12
10
8
6
4
2
0
0
0.1
0.2
0.3
0.4
0.5
CAVITATION NUMBER
SECOND LIQUID CONTENT
0 WEIGHT%
0.25 WEIGHT%
0.50 WEIGHT%
1 WEIGHT%
2 WEIGHT%
4 WEIGHT%
8 WEIGHT%

FIG. 4

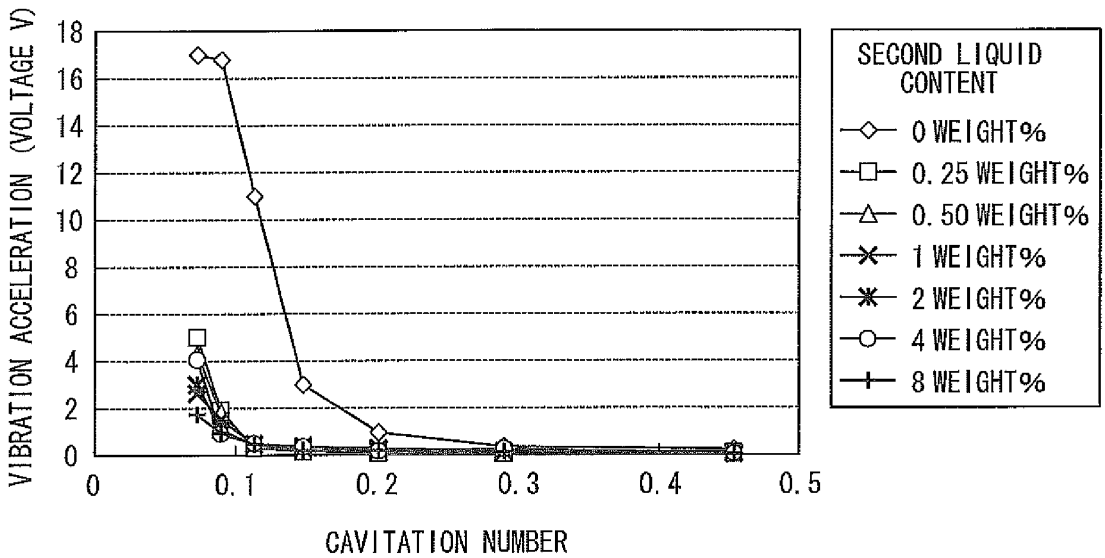
VIBRATION ACCELERATION (VOLTAGE V)
18
16
14
12
10
8
6
4
2
0
0
0.1
0.2
0.3
0.4
0.5
CAVITATION NUMBER
SECOND LIQUID CONTENT
0 WEIGHT%
0.25 WEIGHT%
0.50 WEIGHT%
1 WEIGHT%
2 WEIGHT%
4 WEIGHT%
8 WEIGHT%

FIG. 5

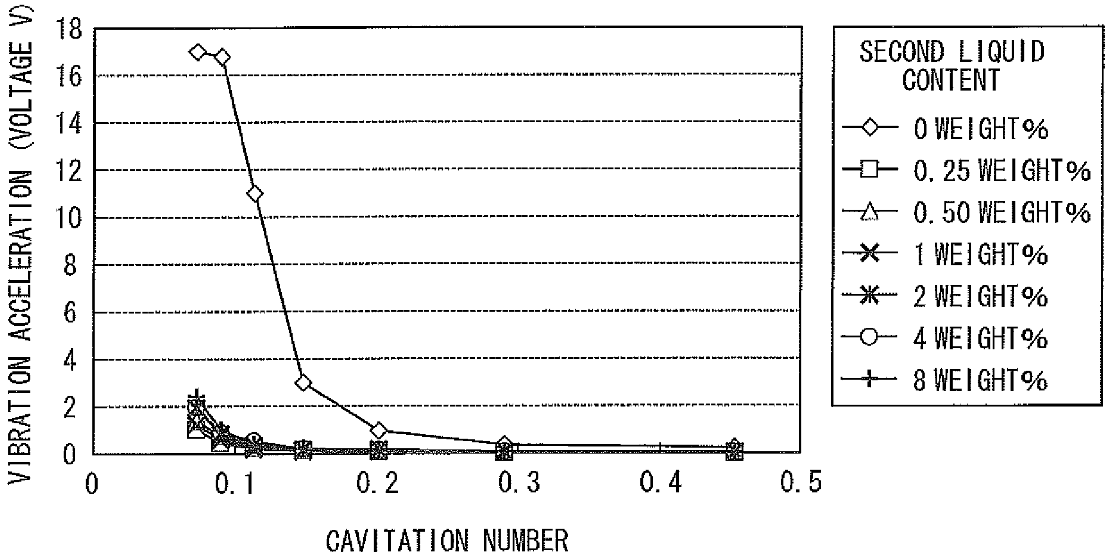
VIBRATION ACCELERATION (VOLTAGE V)
18
16
14
12
10
8
6
4
2
0
0
0.1
0.2
0.3
0.4
0.5
CAVITATION NUMBER
SECOND LIQUID CONTENT
0 WEIGHT%
0.25 WEIGHT%
0.50 WEIGHT%
1 WEIGHT%
2 WEIGHT%
4 WEIGHT%
8 WEIGHT%

FIG. 6

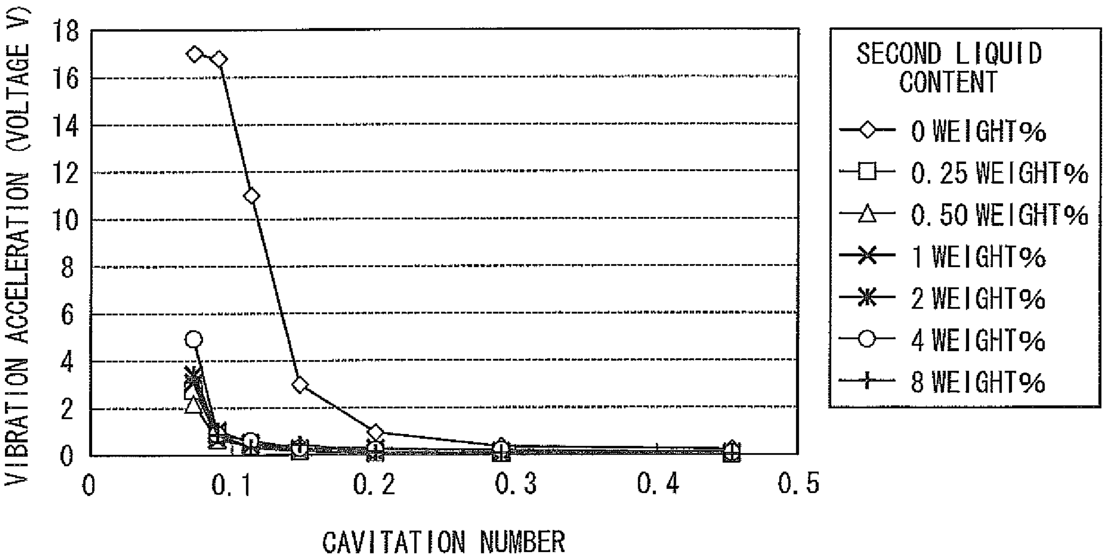
VIBRATION ACCELERATION (VOLTAGE V)
18
16
14
12
10
8
6
4
2
0
0
0.1
0.2
0.3
0.4
0.5
CAVITATION NUMBER
SECOND LIQUID CONTENT
0 WEIGHT%
0.25 WEIGHT%
0.50 WEIGHT%
1 WEIGHT%
2 WEIGHT%
4 WEIGHT%
8 WEIGHT%

FIG. 7

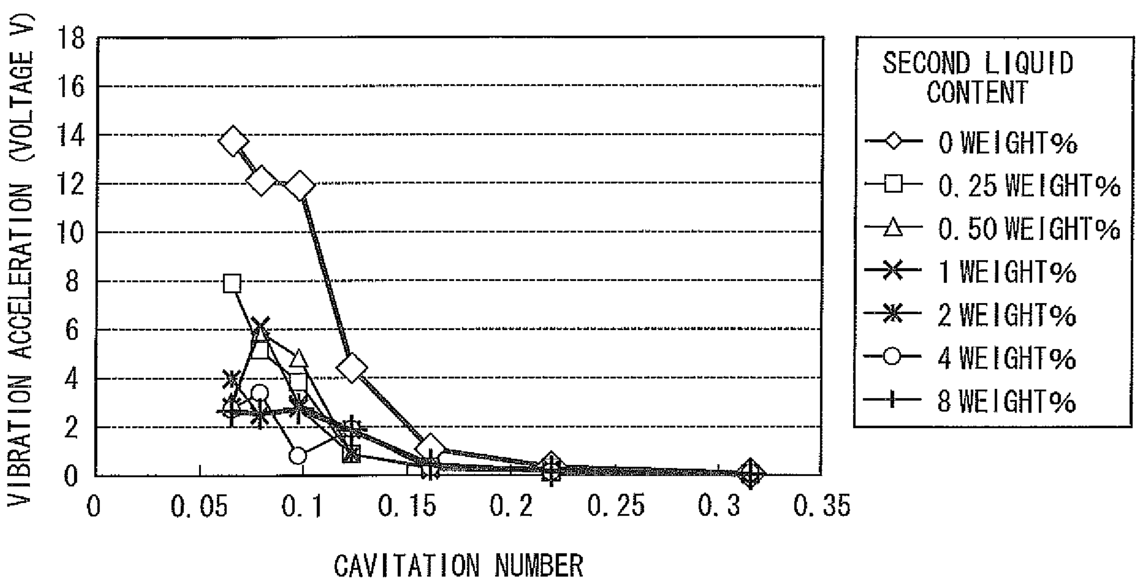
VIBRATION ACCELERATION (VOLTAGE V)
18
16
14
12
10
8
6
4
2
0
0
0.05
0.1
0.15
0.2
0.25
0.3
0.35
CAVITATION NUMBER
SECOND LIQUID CONTENT
0 WEIGHT%
0.25 WEIGHT%
0.50 WEIGHT%
1 WEIGHT%
2 WEIGHT%
4 WEIGHT%
8 WEIGHT%

## INTERNATIONAL SEARCH REPORT

International application No. PCT/JP2010/004057

A. CLASSIFICATION OF SUBJECT MATTER
*C10M111/00*(2006.01)i, *F16F13/08*(2006.01)i, *F16H41/32*(2006.01)i, *C10M105/14*(2006.01)n, *C10M107/38*(2006.01)n, *C10M107/50*(2006.01)n, *C10N30/00*(2006.01)n, *C10N30/18*(2006.01)n, *C10N40/08*(2006.01)n

According to International Patent Classification (IPC) or to both national classification and IPC

B. FIELDS SEARCHED

Minimum documentation searched (classification system followed by classification symbols)
C10M101-177/00, F16F13/08, F16H41/32

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)
CA/REGISTRY(STN)

C. DOCUMENTS CONSIDERED TO BE RELEVANT

| Category* | Citation of document, with indication, where appropriate, of the relevant passages | Relevant to claim No. |
|---|---|---|
| X<br>Y | US 2751355 A (STUDEBAKER-PACKARD CORP.), 19 June 1956 (19.06.1956), entire text (Family: none) | 1-9<br>1-9 |
| X<br>Y | JP 49-34167 B1 (Maruzen Sekiyu Kabushiki Kaisha), 12 September 1974 (12.09.1974), claims; page 2, column 4, line 22 to page 3, column 5, line 5; examples (Family: none) | 1-9<br>1-9 |
| X<br>Y | CN 101294116 A (Shao, QIANG), 29 October 2008 (29.10.2008), claims; examples (Family: none) | 1-9<br>1-9 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>08 September, 2010 (08.09.10) | Date of mailing of the international search report<br>21 September, 2010 (21.09.10) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No.
PCT/JP2010/004057

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | CN 1367231 A (Zhao, HONG),<br>04 September 2002 (04.09.2002),<br>claims; examples<br>(Family: none) | 1-9<br>1-9 |
| Y | JP 2009-36257 A (Kayaba Industry Co., Ltd.),<br>19 February 2009 (19.02.2009),<br>claims; paragraph [0008]<br>(Family: none) | 1-9 |
| Y | JP 9-111277 A (Idemitsu Kosan Co., Ltd.),<br>28 April 1997 (28.04.1997),<br>paragraph [0014]<br>& US 5902777 A & EP 799883 A1<br>& WO 1997/014776 A1 | 1-9 |

Form PCT/ISA/210 (continuation of second sheet) (July 2009)

**INTERNATIONAL SEARCH REPORT**

International application No.
PCT/JP2010/004057

It is unclear that a "first liquid" and a "second liquid" set forth in claims 1, 2, 5 - 9 involve what substances in concrete except the compounds set forth in claims 3, 4, even if the contents stated in the description and common general technical knowledge are taken into consideration. Therefore, the statements in claims 1, 2, 5 - 9 are lack in clarity in the meaning of PCT Article 6.

Consequently, this search has been carried out with respect to the working fluids wherein the compounds set forth in claims 3, 4 are used as the above-said "first liquid" and "second liquid".

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009144620 A
- JP 60034541 A
- JP 5064897 A